# EUROPEAN PATENT SPECIFICATION

(11) **EP 1 472 768 B1**
(45) Date of publication and mention of the grant of the patent: **11.07.2007**
(21) Application number: 03734916.4
(22) Date of filing: 17.01.2003
(51) Int. Cl.: H02G 3/06, H02G 3/04

(54) **CABLE DUCT SYSTEM**
LEITUNGSKANALSYSTEME
SYSTEME DE CONDUITS DE CABLES

(30) Priority: 30.01.2002 NL 1019864
(43) Date of publication of application: 03.11.2004
(73) Proprietor: Gouda Holland B.V., 2851 AW Haastrecht (NL)
(72) Inventor: BOER, Dirk, René, NL-2851 VS Haastrecht (NL)
(74) Representative: Hoorweg, Petrus Nicolaas
(86) International application number: PCT/NL2003/000034
(87) International publication number: WO 2003/065532

(56) References cited:
- WO-A-00/75550
- DE-U- 9 104 301
- US-A- 4 954 015
- US-A- 5 316 243
- US-A- 5 752 781

## Description

The invention relates to a cable duct system according to the preamble of claim 1.

A cable duct system is known from US 5,752,781. A cable duct system according to the preamble is disclosed in this document. These systems can be used for holding fragile cables.

A drawback of the known cable duct systems is that the thickness of the coupling piece forms a narrowing in the holder of the cable duct. The object of the invention is therefore to provide a connection wherein this drawback is alleviated.

This object is achieved with the features according to claim 1. Preferred embodiments of the invention are defined in the dependent claims. The depressed part acts as a receiving space for the base of the cable duct. The system is not narrowed here. The base of connecting element and the duct are substantially in the same plane, abutting.

The method preferably comprises of engaging the cable duct by inserting a part of the cable duct in a connecting element. A part of the cable duct is herein received in the connecting element. Owing to the clamping engagement around the outside of the cable duct a connection is formed, whereby a cable duct system can be constructed. The inserting/receiving of a part of a cable duct in the connecting element provides a suitable engagement, thereby forming a connection of sufficient strength. The connecting element receives a cable duct in for instance a recess. This prevents shifting of the cable duct. The recess can correspond with the size of the cable duct part to be clampingly engaged which is arranged in the recesses.

It is advantageous when the method also comprises machining in non-metal removing manner of at least one end of the cable duct. The construction of a cable duct system at a work location requires making the cable ducts fit and connecting these cable ducts to each other. A cable duct will often have to be made to size. It is favourable here to apply a non-metal removing machining, since no dirt is herein created at/in the work location. Machining operations result in dirt, in the form of splinters and the like, at the work location. The outer end machined in non-metal removing manner will preferably have to be engaged with a connection, preferably in clamping manner, in a special embodiment by means of a snap connection.

According to a further development the outer end, in particular the end machined in non-metal removing manner, is free of any particular engaging means. The end machined in non-metal removing manner comprises only a standing side wall of a cable duct, preferably a standing side wall of a U-shaped profile of a cable duct.

A cable duct system is preferably provided which is electrically conductive. An electrically conductive system provides particular advantages in the application of a cable duct system for cables, particularly in the case of unprotected glass fibre cables.

In the preferred embodiment of the method for the cable duct system, a connecting element connects at least two cable ducts, wherein a bend is defined between the connected cable ducts. It is hereby possible to install a cable duct system at a work location which can be dimensioned to size. Together with non-metal removing machining of the cable ducts a properly fitting cable duct system can be assembled at the work location.

According to the method of the cable duct system, cables received in the connected ducts are preferably guided around a bend. The guiding of the cables, for instance along a part of an arcuate profile, wherein a substantially round bend is defined with a minimum radius, guides the cables which are pulled in the cable duct system. The use of glass fibre cables, in particular the pulling of unprotected glass fibre cables which are highly vulnerable, requires that a cable duct system is assembled which has no sharp angles. Glass fibre cables could break, even when being guided round an obtuse angle.

The invention also provides a cable duct system. A cable duct system comprises cable ducts and connecting elements. A cable duct has at least two outer ends, wherein one outer end has a connecting edge. The connecting element for the cable duct system comprises at least one connecting edge, and clamping means are arranged close to the connecting edge of the connecting element.

According to the invention the cable duct system is characterized by clamping means which are adapted to clampingly engage on the outside of the connecting edge of the cable duct. Clamping engagement on the outside makes it possible to dispense with coupling pieces which cause a narrowing in the passage of the cable duct.

It is advantageous that the clamping means have a lip which protrudes inward from the connecting element. The lip is resilient, whereby a clamping force is created. The lip can cut into the cable duct surface on which the lip engages when an attempt is made to move the cable duct out of engagement.

The engaging means are preferably formed by a recess in the connecting element close to the connecting edge of the connecting element. The connecting edge of the cable duct can hereby be received in the recess. The sharp end of the cable duct is hereby accommodated in protected manner in the recess and can cause no damage to cables received in the cable duct system. The narrowing of the duct by the part of the recess situated on the inside of the cable duct is minimal, since the clamping means are arranged on the outside. The length of the recess can be dimensioned to the length of the side wall of the cable duct. The cable duct preferably has a U-shaped profile. Close to the outer ends of the cable duct the cable duct is free of engaging means, other than the connecting edge itself.

The recess is preferably provided with clamping means. The clamping means can engage over substantially the length of the recess or the length of the side wall of the cable duct, wherein a suitable, non-displacing and easily assembled connection is formed.

It is advantageous to assemble the cable ducts for the cable duct system free of engaging means close to the connecting edge. The cable duct preferably has an edge machined in substantially non-metal removing manner. Such cable ducts are easy to assemble. Such cable ducts are brought to the desired length by means of machining in non-metal removing manner. The cable ducts have a profile. Because the cable duct system can engage on the end of a cable duct machined in non-metal removing manner, without the cable duct being provided with particular engaging means close to that end, a cable duct can be made to length in simple manner. No dirt is released in this operation, which could have an adverse effect on the work location.

The recess for receiving a connecting edge of a cable duct preferably has a rounded finish. This prevents damage to the cables, preferably glass fibre cables, in particular unprotected glass fibre cables, which may be arranged in the cable ducts.

The connecting edge of the connecting element preferably has engaging means for a closing element. The connecting edge can hereby be closed off. No cable is pulled along the connecting edge or through the mouth of the connecting element. By removing the closing element a new cable duct can be engaged, whereby the existing cable duct system can be easily extended.

A part of the cable duct system according to the invention preferably comprises a cover which cannot be lost. Vulnerable cables, in particular glass fibre cables, can hereby be protected against damage from outside the cable ducts. The cover preferably engages pivotally on the cable duct system such that the cover can swing open to two sides about two different axes. Access can hereby be provided in efficient manner to the content of the cable duct.

It is advantageous that at least one of the cable duct elements contains electrically conductive material. The connecting element preferably comprises conducting means which conductively connect the connecting edges such that the cable ducts, which can be respectively engaged close to the connecting edges, are conductively connected. A cable duct system is hereby created which is wholly conductive. A conductive system offers particular advantages when the system is used together with unprotected glass fibres.

In the preferred embodiment two elongate cable ducts can be mutually connected by means of a connecting element, wherein the longitudinal axes of the cable ducts form an angle to each other. The connecting element hereby becomes a corner element. It is thus possible to assemble a cable duct system which can be modified to the specific spatial dimensions of a work location.

In the preferred embodiment according to the invention the connecting element comprises guide means for guiding cables which can be received in the connecting element. It is hereby possible to prevent vulnerable cables, particularly unprotected glass fibre cables, being guided round a bend which has an angle which has an adverse effect on the functioning of the glass fibre cable. A cable can be guided round a bend with guide means, wherein the guide means define a portion of an arc of a circle, wherein a certain minimal outer circumference is defined. The cable is then guided round the outer surface. When a cable is pulled through the cable duct system, the bend according to the invention has a determined minimum radius which prevents the cable being damaged. The minimum radius depends on the fragility of the received cable.

The invention will be further described on the basis of the annexed drawings, in which:
Figure 1 shows a perspective view of a cable duct system according to the invention.
Figure 2 shows a view of a detail of figure 1.
Figure 3 shows a perspective view of a detail of figure 1.

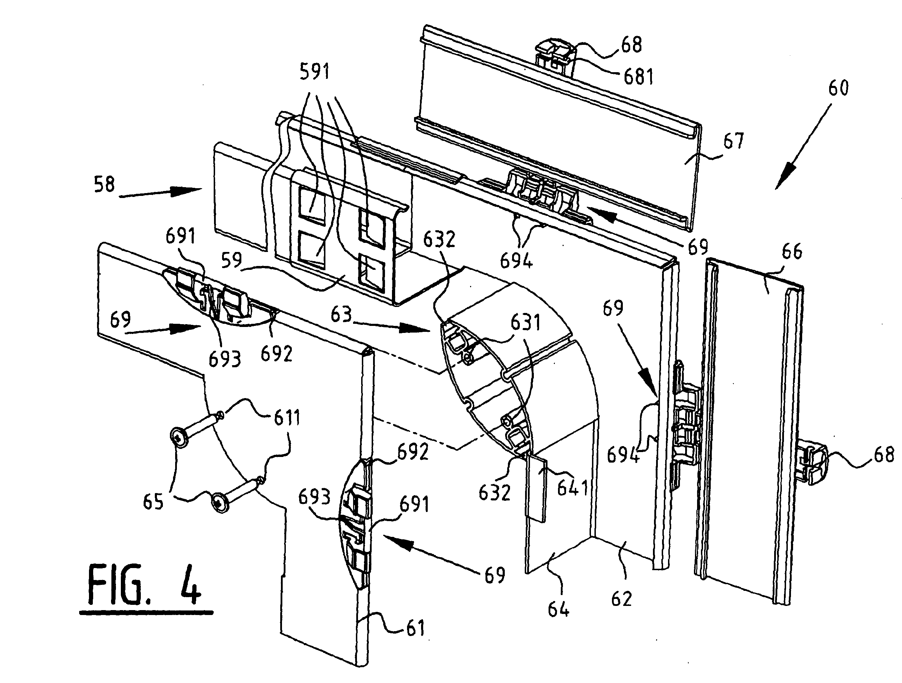

Figure 4 shows a perspective view of a detail of figure 1.
Figure 5 shows a perspective view of cable duct elements which are mutually connected according to a first embodiment.
Figure 6 shows a perspective view of a second embodiment for connecting cable duct elements of the cable duct system.
Figure 7 is a top view of a connecting element according to a third embodiment.
Figure 8 is a perspective view of a fourth embodiment of a cable duct system.

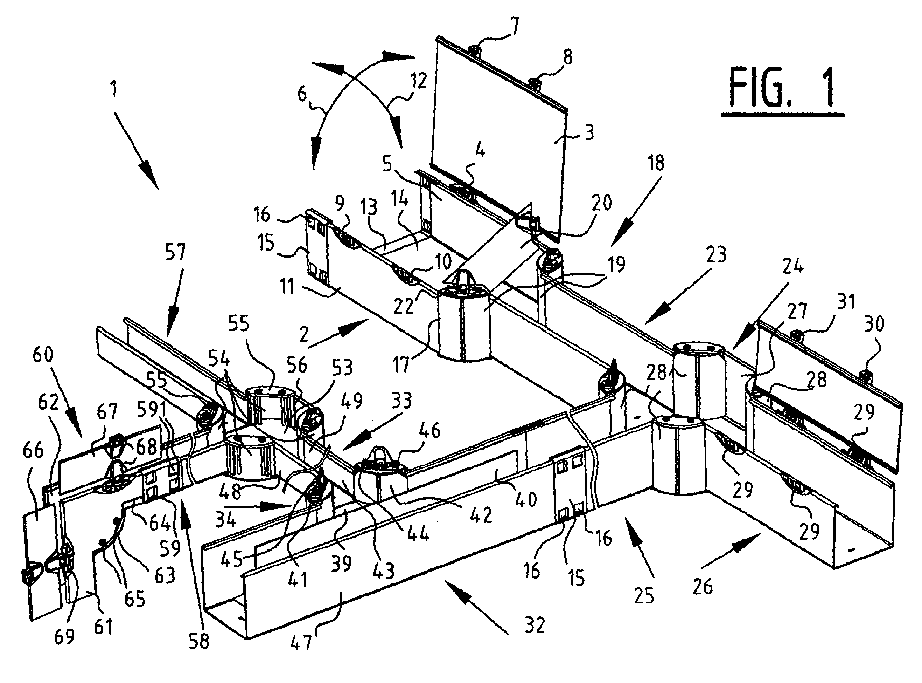

Figure 1 shows a cable duct system 1. Shown is a first U-shaped, elongate cable duct 2 which is provided with a cover 3. The cover 3 can pivot about a hinge 4. Cable duct 2 is provided with four hinges 4. The hinge 4 is arranged on standing wall 5 of duct 2 and engages on cover 3. The cover moves as according to arrow 6.

Hinge 4 is assembled from a clamping part 7,8 and a shaft part 9,10. In this embodiment the clamping part 7,8 is connected to cover 3 and shafts 9,10 are connected to standing wall 5,11. Clamps 7,8 engage on shaft 9,10 such that the cover can perform a pivoting movement around this shaft. In the closed position of the cover the clamps 7,8 engage on shafts 9,10. Cover 3 can pivot according to arrow 6 when hinge 4 forms the pivot axis, and cover 3 can pivot according to arrow 12 when shafts 9,10 form the pivot axis.

The U-shaped profile of cable duct 2 comprises two side walls 5,11 and a base 13. The base serves as support for cables (not shown) which can be received in the cable duct. Cable duct 2 thus forms a holder.

Cable duct 2 has two outer ends, including the edge 14. The edge 14 forms a mouth of cable duct 2. A connecting element 15 can engage close to the mouth of the cable duct. Connecting element 15 has substantially the same U-profile as cable duct 2, the connecting element 15 is of a slightly larger size. Connecting element 15 is arranged substantially around cable duct 2. Connecting element 15 is provided with clamping means 16 made up of a lip 16. The lip protrudes inward from the U-profile of connecting element 15. The lips are resilient. When cable duct 2 is arranged in connecting element 15, the lips 16 will move slightly inward in resilient manner and engage the edge 14 on the outside of cable duct 2 and herein exert a clamping force. With this lip 16 it is easy to arrange and clampingly engage a cable duct, since the lip will readily move inward in resilient manner. It is however considerably more difficult to remove the cable duct again, since the edge of the lip engages on the cable duct, wherein considerable friction occurs.

Cable duct 2 and connecting element 15 contain a conductive material, e.g. a metal. The lips 16 are conductive. The clamping force can be created by making use of the resilient properties of the metal.

The connection between the cable duct 2 and connecting element 15 is dependent on the clamping force exerted by lips 16 and the properties of the material, in particular the roughness or the friction which occurs when lips 16 are clamped on the outer surface of cable duct 2. By making use of metals the choice of clamping force can be so great that the friction is sufficient for secure construction of the connection to the cable duct.

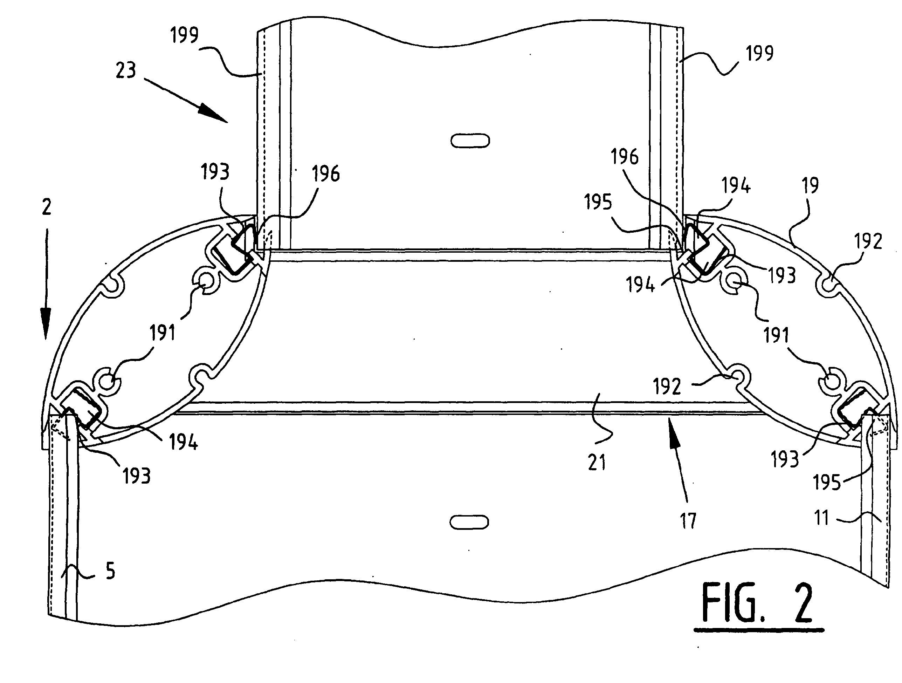

The other end of cable duct 2 has an edge 17. Cable duct 2 is engaged at the outer ends of side walls 11,5 by connecting element 18, in the form of a narrowing element. The narrowing element 18 is made up of two connecting parts 19, a cover 20, a base 21 and two hinges 22. The narrowing element 18 forms the transition from the wide U-shaped cable duct 2 to the smaller U-shaped cable duct 23, see figure 2. Figure 2 shows the top view of a narrowing element 18, without cover 20.

Connecting parts 19 are embodied with recesses 195 which are adapted to receive side wall 5,11,199 of a cable duct 2,23. When side wall 5,11,199 is inserted into the relevant recess in connecting part 19, the resilience of a lip 196 of a clamping spring 193 will have to be overcome. Clamping spring 193 clamps the side wall 5,11 in recess 195. Cable duct 2 is as it were extended with the narrowing element 18. Cable duct 23 is also connected to the narrowing element by means of clamping the side wall 199 in recess 195 of connecting part 19.

Connecting part 19 is formed by a pillow-shaped profile comprising two threaded channels 191, two longitudinal grooves 192, two chambers 194 and two recesses 195. Chamber 194 can receive a clamping spring 193. Protruding through base 21 are two screws (not shown) which engage in threaded channels 191. Hinges 22 may also be connected to the connecting part with screws.

Cable duct 23 is connected to connecting element 24 embodied as T-connection part with three mouths, which are each connected to cable ducts 23, 25 and 26. One mouth of connecting element 24 is closed with closing means 27.

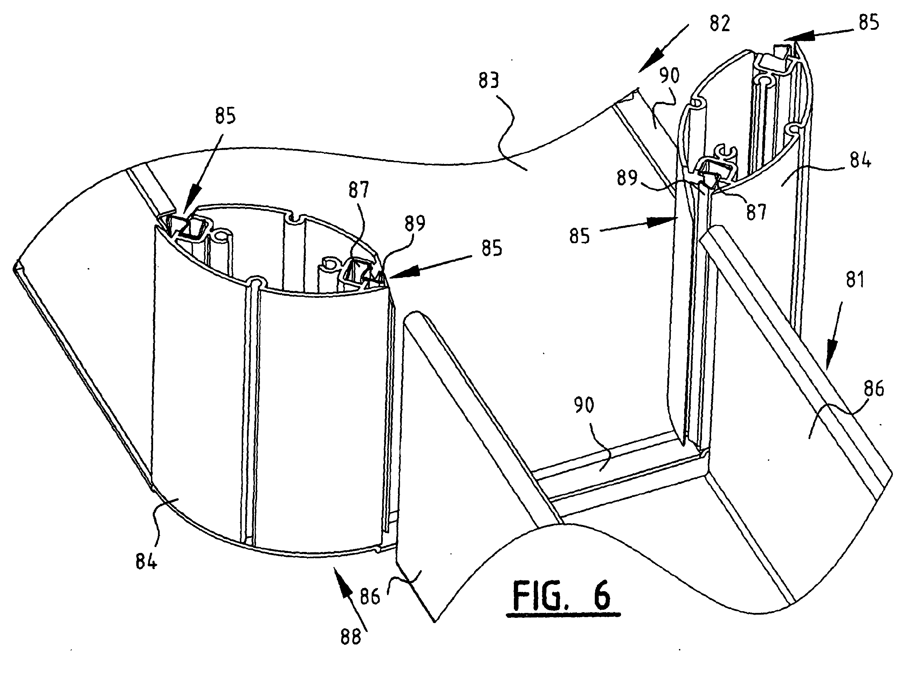

The connecting parts 28 have the same pillow-shaped profile as connecting part 19, provided with a recess, in which the standing side wall of the U-shaped profile of cable duct 23, 25 and 26 can be received and can be engaged in clamping manner (see figure 6). The recess is also suitable for receiving a closing means 27. Closing means 27 can be removed, thus forming an open mouth of connecting element 24. The standing recess of the connecting element 24 can first of all receive an edge, which runs parallel to the plane of the mouth of the connecting element 24, such as closing means 27, and in addition can receive an edge which runs perpendicularly of the plane of the mouth of the connecting element 24, for instance side walls of a cable duct. Both the cable duct and the closing means 27 are received in the recess and engaged clampingly by the lip of the clamping spring.

Removal of closing means 27 and the arranging of a new cable duct element in this mouth demonstrates that the cable duct system according to the invention can be readily extended with additional cable ducts after assembly of the cable duct system for its first purpose. The cable duct system is thus very suitable for complicated cable duct systems such as those which can be used in the telecommunications industry, and can be extended in simple manner.

Cable duct 26 is provided with a cover device. Connected to the standing side walls of the U-shaped profile of cable duct 26 are four shaft parts 29. These can engage on clamps 31 connected to the edges of cover 30. Cover 30 can pivot in two ways. Two adjacent shaft parts, engaged clampingly by the respective clamping parts of the hinge, herein form the pivot axis of cover 30.

Cable duct 25 is connected to cable duct 32 by means of a connecting part 15. Cable duct 32 is constructed with a branch to a smaller cable duct 33. The cross-section of cable duct 33 is a quarter of the cable duct cross-section of cable duct 32.

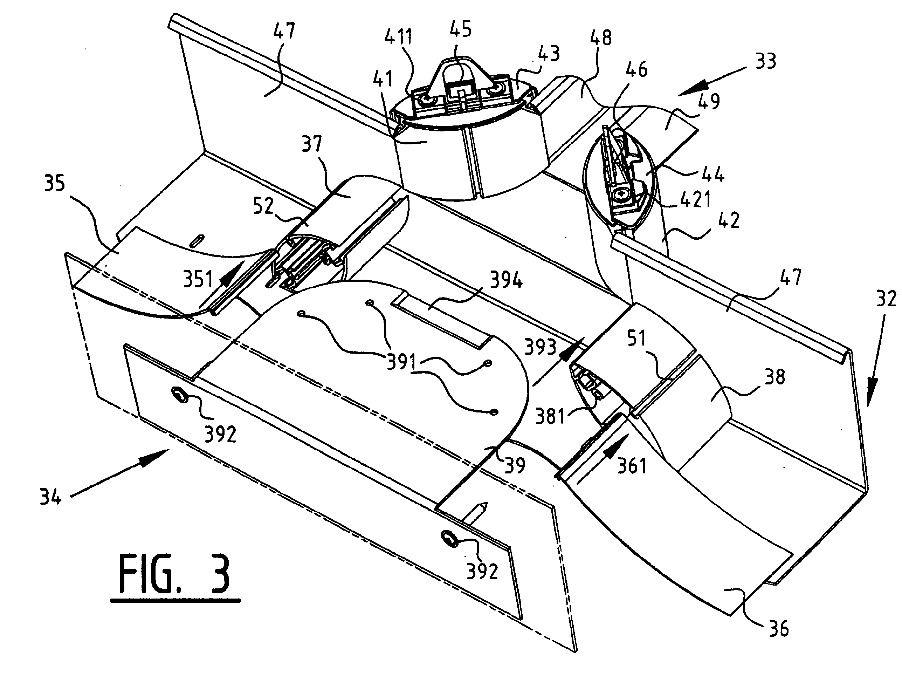

In order to make a branch, an elevating part 34 is arranged in cable duct 32, see figure 3. The elevating part 34 is made up of two curved plates 35,36, two connecting parts 37, 38 a bridge part 39, an auxiliary wall 40, two connecting element 41, 42 provided with cover parts 43, 44 each having a shaft 45,46. A clamping part 451,461 engages on the shaft such that a hinge is defined. The clamping part can be connected to a cover. The cover can swing on two axes. Connecting elements 41 and 42 connect the edges of side wall 47 of cable duct 32 to the edges 48, 49 of duct 33.

Cables which can be easily damaged by bending are guided by the curved plates 35,36 and two connecting parts 37,38. A difference in height is bridged in smooth manner. Cable duct 32 is for instance 100x100 mm, while duct 33 is 50x50 mm. The difference in height which must be surmounted then amounts to 50 mm. Bridging of this difference in height is done with two curved plates 35, 36 which engage on a longitudinal groove 50, 51 of connecting parts 37, 38. The curved plates 35,36 are arranged in the longitudinal groove by a movement as according to arrow 351, 361.

The connecting part 37,38 has a pillow-shaped profile, one side wall of which has an arc with a radius of 50 mm. The curved plate likewise has substantially an arcuate form with a radius of 50 mm. The bridge part 39 is situated at a height of 50 mm in cable duct 32.

Bridge part 39 is assembled from two substantially mutually perpendicular surfaces, see figure 3. The first surface has four threaded holes 391. Screws can be placed through the holes such that bridge part 39 is connected to connecting parts 41,42. The second surface has two threaded holes with two screws 392. These screws connect bridge part 39 to connecting part 37,38 by means of a screw connection to the respective threaded channel 381. The bridge part also has a depressed part 394. This is situated close to the mouth of the branching. The mouth of elevating part 34 is formed by recesses 421,431 of connecting parts 42,43 and depressed part 394. The mouth receives the edge of cable duct 33. The recesses receive side walls 48,49, the depressed part 394 has a space for receiving edge 331 which forms the base of the U-shaped profile of cable duct 33. The clamping means, here also formed by clamping springs (not shown), engage clampingly on the outside of cable ducts 32,33.

The connecting parts 41, 42 behave in similar manner to the above connecting parts 19. The auxiliary wall 40 enables a separation of the cables necessary for the branching and the cables which are not being branched. Screws 392 connect auxiliary wall 40 to the standing surface of bridge part 39. The cables which are not being branched do not run over the elevation.

Cable duct 33 is connected to a connecting element 52 which is formed by a base 53, connected to four connecting parts 54 provided with cover parts 55. Connecting element 52 is embodied as T-junction. One of the mouths of the connecting element is closed with a closing means 56.

Connecting element 52 is connected to cable ducts 57, 58. Connecting parts 54 engage clampingly on the side walls of cable ducts 57, 58 machined in non-metal removing manner. The other end of cable duct 58 is engaged clampingly by connecting element 59 which corresponds to connecting element 15. Connecting element 59 has lips 591 which engage on the standing side walls of cable duct 58 and descending part 60. Connecting element 59 and lips 591 contain a metal providing a resilience and electrical conduction.

Descending part 60 enables a vertical cable duct. To this end the descending part 60 is assembled from a connecting element 63 and two corner pieces 61, 62, which have the same shape and are placed substantially vertically. The corner piece 62 has a flange 64 with lip 641 which engages round the opposite corner piece 61. Screws 65 protrude through holes 611 of corner piece 61 and engage in threaded channels 631 in the pillow-shaped profile of connecting element 63. Corner piece 62 is connected in the same manner to connecting element 63.

Corner pieces 61, 62 are provided with a cover 66, 67. In the closed situation the covers are connected with two clamping parts 68 to two shaft parts 69. Clamping part 68 and shaft part 69 form a hinge. The covers can pivot around two axes. Access to the cable duct can be readily provided in this manner. Shaft part 69 has a shaft 691, a flange 692, a stop 693 and two hooks 694. The clamping mouth 681 of clamping part 68 engages on shaft 691. Flange 692 lies over the standing side wall of corner piece 61. Stop 693 defines an open position for cover 66,67. Hooks 694 protrude through portions punched out in the corner pieces 61,62 such that shaft parts 69 are connected non-movably to the corner pieces.

Connecting element 63 receives in its recesses 632 an edge of flange 64 of corner pieces 61, 62 and engages these in clamping manner.

Cables in the cable duct system are guided over one side of the pillow-shaped profile of connecting element 63 and herein form a bend with a radius of 50 mm.

The shown cable duct system 1 is easy to use and can be used for different purposes. The cable duct system can be easily extended. The cable duct system is particularly suitable for receiving vulnerable cables, in particular unprotected glass fibre cables.

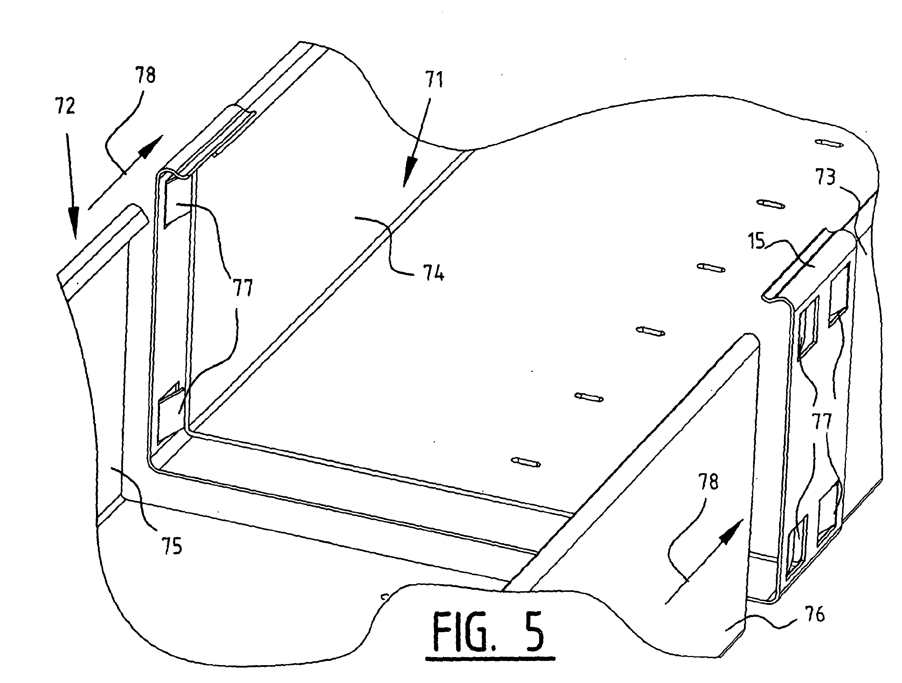

Figure 5 shows a connecting element 15,59 in detail. Connecting element 15 can mutually connect two cable ducts 71, 72 in clamping manner around the outside of cable ducts 71, 72. Connecting element 15 has for this purpose a U-shaped profile which is a little larger than the U-shaped profile of cable ducts 71, 72. Connecting element 15 engages on the standing side walls 73, 74 of cable duct 71 close to the outer end of the cable duct. For this purpose connecting element 15 has eight lips 77. These lips can for instance be punched out. The material of connecting element 15 is resilient. Lips 77 can move resiliently, wherein a clamping force can be exerted. Lips 77 of connecting element 15 engage clampingly close to the outer end of cable duct 71. When cable duct 72 is moved as according to arrow 78, lips 77 will also engage on the standing side walls 75, 76 of cable duct 72 close to the end of cable duct 72.

The connecting of cable ducts 71 and 72 to each other requires no more than the movement towards each other as according to arrow 78, wherein connecting element 15 provides a clamping connection. The outer end of cable ducts 71,72 is free of specific engaging means. The outer end is machined in non-metal removing manner. Lips 77 engage on the outer end. Movement of cable duct 72 in opposite direction to arrow 78 will result in the lips 77 'cutting' into side walls 73-76.

Fig. 6 shows the connection of a cable duct 81 to connecting element 82. Shown is the outer end of cable duct 81 which is machined in non-metal removing manner and is free of engaging means. Connecting element 82 is assembled from a base surface 83 provided with depressed part 90 having fixed thereto the connecting parts 84 which have a pillow-shaped profile. The connecting part has two recesses 85 which are suitable for receiving a standing side wall 86 of the U-shaped profile of a cable duct 81. The recesses are also suitable for receiving a closing element (see figure 1).

Recesses 85 can receive a standing side wall 86 and engage it clampingly by means of a clamping spring 87 which is accommodated in connecting part 84. Arranging of the outer end of side wall 86 in recess 85 will cause clamping spring 87 to engage clampingly on the outside of standing side wall 86 of cable duct 81. Cable duct 81 is displaced for this purpose as according to arrow 88. A return movement of cable duct 81 is prevented by lip 89 cutting into side wall 86.

The mouth of connecting element 82 is formed by two standing recesses 85 of two connecting parts 84 and depressed part 90. The edge/the end of U-shaped cable duct 81 is received in the mouth of connecting element 82.

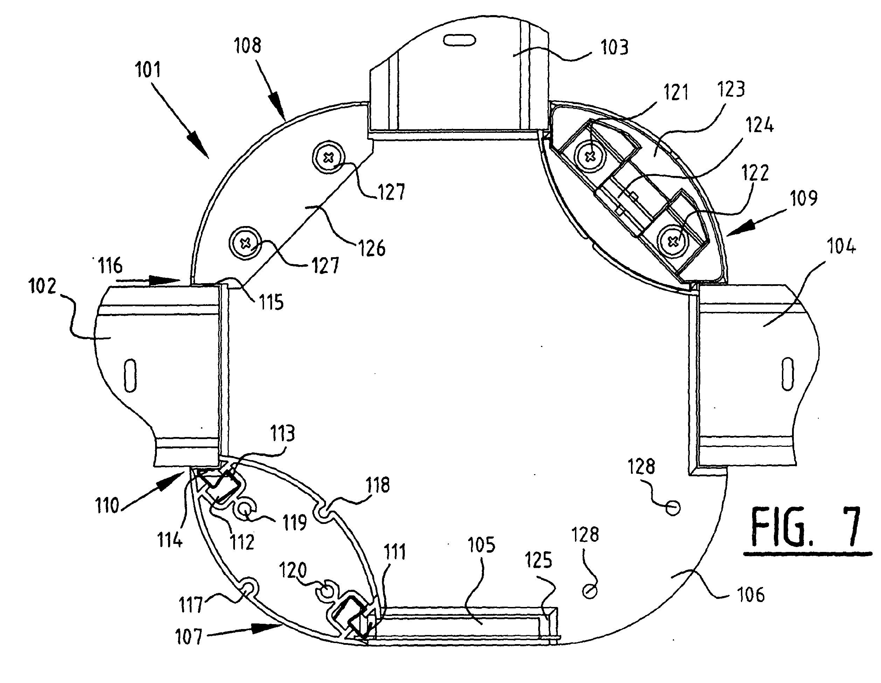

Fig. 7 shows a top view of a connecting element 101 of a cable duct system according to the invention. Connecting element 101 connects three cable ducts 102, 103, 104 to each other as T-shaped connecting element. One mouth of the connecting element 101 has a closing means 105. Connecting element 101 is assembled from a base 106, and standing side walls 107, 108 and 109, formed by connecting parts. The connecting parts 107-109 stand vertically from the base 106.

The connecting parts 107, 109 have a pillow-shaped profile. Side wall 107 has two recesses 110, 111. Recess 110 receives the side edge of cable duct 102. Clamping means 112 in the form of a clamping spring is received in a chamber 113 and close to recess 110. Clamping spring 112 contains a resilient material. The lip 114 of clamping spring 112 will bend resiliently and herein exert a clamping force on the outside of the standing side wall of cable duct 102.

Side wall 108 likewise contains a resilient means 115 which can exert clamping force on the standing side wall of cable duct 102, when this cable duct is moved in the mouth between the side walls 107 and 108 as according to arrow 116.

The pillow-shaped profile of side wall 107 comprises two longitudinal grooves 117 and 118 and two threaded recesses 119, 120. The threaded recesses 119 and 120 can receive screws 121 and 122, so that side wall 107, 109 can be covered with a cover part 123. The cover part 123 has a shaft 124 on which a clamping part connected to a cover (not shown) can engage and around which shaft the cover can pivot.

The pillow-shaped profiles 109 also form a guide means for cables which are pulled from cable duct 103 to cable duct 104. The cables are guided round the bend without an acute angle being formed herein, which could damage vulnerable cables.

The base 106 has depressed parts 125. The press-out parts form together with the side walls the mouth of the connecting element which can receive a cable duct.

Connecting part 108 is covered with cover 126. Cover 126 engages on the connecting part by means of two screws 127, which are received in the threaded channel of the connecting part.

Connecting parts 107-109 engage on the base 106 by means of screws which are placed through punched-out parts 106 and engage in threaded channels 119, 120.

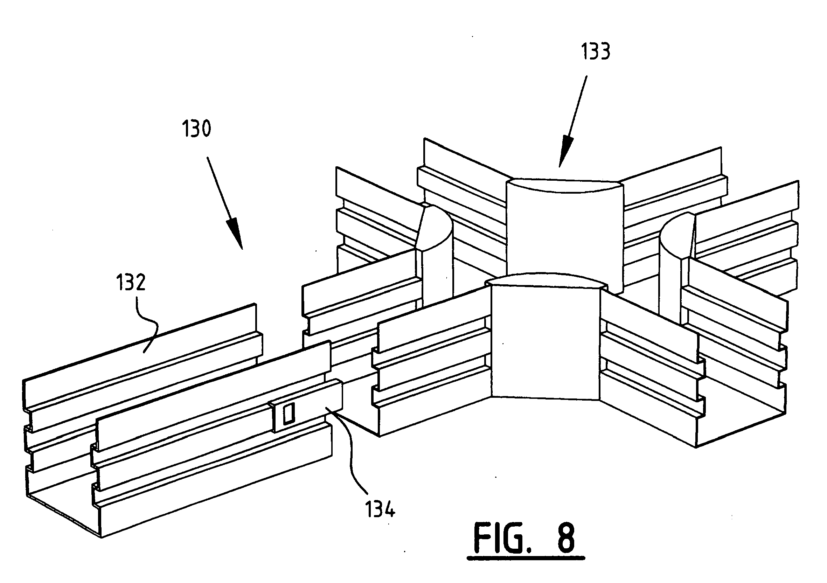

Figure 8 shows a fourth embodiment of a cable duct system 130. Shown are a cross element 131 and a cable duct 132 with a substantially U-shaped profile. The standing side walls of the cross element and the cable duct have a profiling. Clamping engagement on the grooves of the profiling takes place by means of a fitting 134. With the same fitting 134 two cable ducts can be mutually connected.

## Claims

1. Cable duct system comprising cable ducts and connecting elements, wherein at least one cable duct has a profile with two standing side walls and at least a base, wherein the cable duct has at least two ends, said end having a connecting edge, wherein at least one connecting element for cable ducts comprises a base for supporting cables and at least two connecting mouths, each having at least one connecting edge, and wherein at the connecting edge of the connecting element clamping means are arranged adapted to clampingly engage the outside of the standing side walls of the cable duct, **characterized in that** the connecting element's base is provided with a depressed part at the mouth.

2. Cable duct system as claimed in claim 1, **characterized in that** the connecting end is machined in a non-metal removing manner.

3. Cable duct system as claimed in claim 1 or 2, **characterized in that** the base of the connecting element is free of engaging means for the cable duct.

4. Cable duct system as claimed in any of the claims 1-3, **characterized in that** the cable ducts are free of engaging means.

5. Cable duct system as claimed in any of the claims 1-4, **characterized in that** the connecting element comprises curved wall elements as guide means for cables, wherein said wall elements widen from substantially co-linear with the engaged cable duct near the mouth towards an interior of the connecting element.

6. Cable duct system as claimed in any of the claims 1-5, **characterized in that** the connecting element has engaging means for a closing means.

7. Cable duct system as claimed in any of the claims 1-6, **characterized in that** at least one element of the system is provided with a pivoting cover which cannot be lost and which is arranged close to the open end of the U-shaped profile of an element.

8. Cable duct system as claimed in any of the claims 1-7, **characterized in that** at least one of the cable duct elements contains electrically conductive material.

9. Cable duct system as claimed in any of the claims 1-8, **characterized in that** the connecting element comprises conducting means which conductively connect the connecting edges such that the cable ducts, which can be respectively engaged close to the connecting edges, can be conductively connected.

10. Cable duct system as claimed in any of the claims 1-9, **characterized in that** two elongate cable ducts can be mutually connected by means of the connecting element, wherein the longitudinal axes of the cable ducts form an angle to each other.

11. Cable duct system as claimed in any of the claims 1-10, **characterized in that** the connecting element comprises guide means for guiding round a determined angle cables which can be received by the connecting element, wherein the guide means have a determined minimum outer circumference which depends on the fragility of the cable.

## Patentansprüche

1. Kabelkanal-System, welches Kabelkanäle und Anschlusselemente aufweist, wobei mindestens ein Kabelkanal einen Querschnitt mit zwei stehenden Seitenwänden und mindestens einer Basis aufweist, wobei der Kabelkanal mindestens zwei Enden aufweist, wobei das Ende einen Anschlussrand aufweist, wobei mindestens ein Anschlusselement für Kabelkanäle eine Basis zum Abstützen von Kabeln und mindestens zwei Anschlussmündungen aufweist, wobei jedes mindestens einen Anschlussrand aufweist, und wobei beim Anschlussrand des Anschlusselements Klemmmittel angeordnet sind, die zur Klemmbefestigung außerhalb der stehenden Seitenwände des Kabelkanals angepasst sind, **dadurch gekennzeichnet, dass** die Basis des Anschlusselements mit einem abgesenkten Abschnitt bei der Mündung versehen ist.

2. Kabelkanal-System wie in Anspruch 1 beansprucht, **dadurch gekennzeichnet, dass** Anschlussende auf eine metallfreie Beseitigungsweise bearbeitet ist.

3. Kabelkanal-System wie in Anspruch 1 oder 2 beansprucht, **dadurch gekennzeichnet, dass** die Basis des Anschlusselements frei von Eingriffsmitteln für den Kabelkanal ist.

4. Kabelkanal-System wie in irgendeinem der Ansprüche 1-3 beansprucht, **dadurch gekennzeichnet, dass** die Kabelkanäle frei von Eingriffsmitteln sind.

5. Kabelkanal-System wie in irgendeinem der Ansprüche 1-4 beansprucht, **dadurch gekennzeichnet, dass** das Anschlusselement als Führungsmittel für Kable gekurvte Wandelemente aufweist, wobei die Wandelemente sich von im Wesentlichen ko-linear mit dem im Eingriff stehenden Kabelkanal nahe der Mündung hin zum Inneren des Anschlusselements aufweiten.

6. Kabelkanal-System wie in irgendeinem der Ansprüche 1-5 beansprucht, **dadurch gekennzeichnet, dass** das Anschlusselement Eingriffsmittel für ein Schließmittel aufweist.

7. Kabelkanal-System wie in irgendeinem der Ansprüche 1-6 beansprucht, **dadurch gekennzeichnet, dass** mindestens ein Element des Systems mit einer Schwenkabdeckung versehen ist, welche nicht verloren werden kann und welche nahe des offenen Endes des U-förmigen Querschnitts eines Elements angeordnet ist.

8. Kabelkanal-System wie in irgendeinem der Ansprüche 1-7 beansprucht, **dadurch gekennzeichnet, dass** mindestens eines der Kabelkanal-Elemente elektrisch leitfähiges Material beinhaltet.

9. Kabelkanal-System wie in irgendeinem der Ansprüche 1-8 beansprucht, **dadurch gekennzeichnet, dass** das Anschlusselement Leitungsmittel aufweist, welche die Anschlussränder derart leitfähig verbinden, dass die Kabelkanäle, welche jeweils nahe an den Anschlussränder ankuppelbar sind, leitfähig angeschlossen werden können.

10. Kabelkanal-System wie in irgendeinem der Ansprüche 1-9 beansprucht, **dadurch gekennzeichnet, dass** zwei längliche Kabelkanäle mittels des Anschlusselements aneinander gekuppelt werden können, wobei die Längsachsen der Kabelkanäle miteinander einen Winkel ausbilden.

11. Kabelkanal-System wie in irgendeinem der Ansprüche 1-10 beansprucht, **dadurch gekennzeichnet, dass** das Anschlusselement Führungsmittel zum um einen vorbestimmten Winkel Herumführen von Kabeln aufweist, welche von dem Anschlusselement aufnehmbar sind, wobei die Führungsmittel einen vorbestimmten minimalen Außenumfang haben, der von der Brüchigkeit des Kabels abhängt.

## Revendications

1. Système de conduits de câbles comprenant des conduits de câbles et des éléments de connexion, dans lequel au moins un conduit de câble a un profil avec deux parois latérales droites et au moins une base, dans lequel le conduit de câble a au moins deux extrémités, ladite extrémité ayant un bord de connexion, dans lequel au moins un élément de connexion pour les conduits de câbles comprend une base pour supporter les câbles et au moins deux embouchures de connexion, ayant chacune au moins un bord de connexion et dans lequel au niveau du bord de connexion de l'élément de connexion des moyens de serrage sont agencés, adaptés à engager par serrage l'extérieur des parois latérales droites du conduit de câble, **caractérisé en ce que** la base de l'élément de connexion est munie d'une partie en creux au niveau de l'embouchure.

2. Système de conduits de câbles selon la revendication 1, **caractérisé en ce que** l'extrémité de connexion est usinée d'une manière ne retirant pas le métal.

3. Système de conduits de câbles selon la revendication 1 ou 2, **caractérisé en ce que** la base de l'élément de connexion est dépourvue de moyens d'engagement pour le conduit de câble.

4. Système de conduits de câbles selon l'une quelconque des revendications 1 à 3, **caractérisé en ce que** les conduits de câble sont dépourvus de moyens d'engagement.

5. Système de conduits de câbles selon l'une quelconque des revendications 1 à 4, **caractérisé en ce que** l'élément de connexion comprend des éléments de paroi incurvés comme moyens de guidage pour les câbles, dans lequel lesdits éléments de paroi s'élargissent depuis sensiblement colinéaires avec le conduit de câble engagé près de l'embouchure vers un intérieur de l'élément de connexion.

6. Système de conduits de câbles selon l'une quelconque des revendications 1 à 5, **caractérisé en ce que** l'élément de connexion a des moyens d'engagement pour un moyen de fermeture.

7. Système de conduits de câbles selon l'une quelconque des revendications 1 à 6, **caractérisé en ce que** au moins un élément du système est muni d'un couvercle pivotant qui ne peut pas être perdu et qui est agencé proche de l'extrémité ouverte du profil en forme de U d'un élément.

8. Système de conduits de câbles selon l'une quelconque des revendications 1 à 7, **caractérisé en ce que** au moins un des éléments de conduits de câbles contient un matériau électriquement conducteur.

9. Système de conduits de câbles selon l'une quelconque des revendications 1 à 8, **caractérisé en ce que** l'élément de connexion comprend des moyens de conduction qui connectent par conduction les bords de connexion de telle sorte que les conduits de câbles, qui peuvent être respectivement engagés à proximité des bords de connexion, peuvent être connectés par conduction.

10. Système de conduits de câbles selon l'une quelconque des revendications 1 à 9, **caractérisé en ce que** deux conduits de câbles allongés peuvent être mutuellement connectés au moyen de l'élément de connexion, dans lequel les axes longitudinaux des conduits de câbles forment un angle l'un par rapport à l'autre.

11. Système de conduits de câbles selon l'une quelconque des revendications 1 à 10, **caractérisé en ce que** l'élément de connexion comprend des moyens de guidage pour guider autour d'un angle déterminé les câbles qui peuvent être reçus par l'élément de connexion, dans lequel les moyens de guidage ont une circonférence externe minimale déterminée qui dépend de la fragilité du câble.
